# EUROPEAN PATENT APPLICATION

(11) **EP 1 322 056 A1**
(43) Date of publication of application: **25.06.2003**
(21) Application number: 01403295.7
(22) Date of filing: 19.12.2001
(51) Int. Cl.: H04J 3/08

(54) **Method and network element for avoiding misconnections in a shared protection ring telecommunication network**

(71) Applicant: ALCATEL, 75008 Paris (FR)
(72) Inventor: Sestito, Vincenzo, 20127 Milano (IT); Grandi, Pietro Vittorio, 20139 Milano (IT); Mazzini, Andrea, 20060 Pessano con Bornago (Milano) (IT)
(74) Representative: Colombo, Stefano Paolo

(57) **Abstract**

A method and network element for avoiding misconnections in a shared protection ring telecomunication network. In such ring networks, misconnections should be avoided in case of node or fibre failures. Misconnections are avoided by way of squelching traffic protection channels by means of squelching tables (ST1 to ST8) respectively located within the network elements (NE1 to NE8) of the ring (RNG). Each network element of the ring having protection functions fills in its own squelching table with squelching data derived from ring connection data.

## Description

The present invention relates to a method for avoiding misconnections in a shared protection ring according to the preamble of claim 1, to a method for filling in squelching tables and to a network element using the same.

In telecommunication networks comprising a number of network elements protection against failures is very important.

For SDH, network protection architectures are extensively dealt with in ITU-T recommendation G.841. It should be noted that the present invention is equally applicable to and valid for SONET networks even if the present description only refers to SDH for semplicity purposes. Unless otherwise specifically indicated, "SDH" should be intended in a general and wide sense in order to include "SONET" and any other synchronous digital transmission system.

In a shared protection ring, particularly in a Multiplex Section Shared Protection Ring ("MS-SPRING" or "MS-SP ring"), in order to transport traffic between the network elements of the ring there are provided traffic working channels and traffic protection channels. During the normal (namely, free of failures) operation, working channels are used for high priority traffic and protection channels may be used for extra (low priority) traffic. In case of failures, protection channels are used for normal traffic but misconnections in these channels need to be avoided. All this is well known.

Shared protection rings may be two-fibre or four-fibre; in the first case, usually the capacity of a fibre is split in two: the first half is used for working channels and the second half is used for protection channels; in the second case, usually, one fibre is used for working channels and the other fibre is used for protection channels. The present invention relates to both cases.

The above mentioned recommendation mainly relates to protection at the Multiplex Section level for SDH/SONET networks; but the present invention is limited neither to this specific level nor to this specific kind of network/technology, although it finds particularly advantageous application in this case.

In order to avoid misconnections, it is normal practice to squelch traffic protection channels by means of squelching tables; these tables are manually provisioned by an operator through a user interface (e.g. a craft terminal or an operating system) to each node, i.e. network element, of the ring. Every time a new path is established in the ring, the operator needs to update the squelching tables of each network element having protection functions.

Such a method is deeply error affected; the higher the number of paths established in the ring, the higher the risk of errors in filling the squelching tables; additionally, the user interfaces and/or the network management applications to be used in case of network elements of a shared protection ring need to have specific primitives for squelching tables.

Therefore it is the object of the present invention to provide a solution to these problems.

This object is achieved through the method for avoiding misconnections having the functionality set out in independent claim 1.

According to another strictly related aspect, the present invention relates also to a method for filling squelching tables having the functionality set forth in independent claim 9.

According to the basic idea of the present invention, the filling of squelching tables is automatically carried out by the corresponding network elements based on ring connection data.

Therefore, according to further aspects, the present invention relates also to a network element, possibly comprising a computer program, and to a computer readable medium having the features respectively set forth in independent claims 14 and 16 allowing the realization of the above referenced methods.

Further advantageous aspects of the present invention are set out in the dependent claims. All the claims are considered as an integral part of the present description.

The invention will become more apparent from the following description to be considered in conjunction with the accompanying sheet of drawing, wherein:

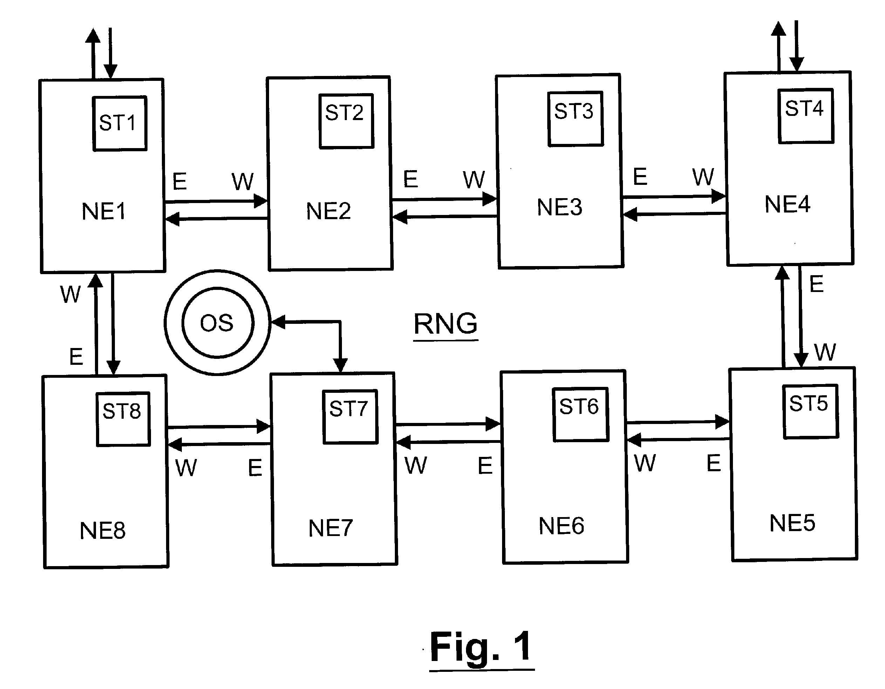

- Fig. 1 shows an embodiment of a shared protection ring comprising network elements according to the present invention.

With reference to Fig. 1, a multiplex section shared protection ring RNG comprises e.g. eight network elements NE1, NE2, NE3, NE4, NE5, NE6, NE7, NE8. Ring RNG is a two-fibre ring. Each fibre is used for a one-way communication. Each network element of ring RNG has two neighbouring network elements: for example network element NE3 has a first neighbouring network element NE4 connected to east side E of network element NE3 through two lengths of optical fibre and a second neighbouring network element NE2 connected to west side W of network element NE3 through two lengths of optical fibre; it is to be noted that, for elements NE5, NE6, NE7 and NE8 the side positions are reversed, according to a usual conventional practice.

A generic network element NE-i comprises many different components; some of them are hardware components and some of them are software components; for simplicity, the Figure shows only the generic squelching table ST-i that matters with the present invention. Element NE1 has its own squelching table ST1, element NE2 has its own squelching table ST2, element NE3 has its own squelching table ST3, element NE4 has its own squelching table ST4, element NE5 has its own squelching table ST5, element NE6 has its own squelching table ST6, element NE7 has its own squelching table ST7, element NE8 has its own squelching table ST8.

Ring RNG could be part of a telecommunication network, not shown in the Figure; the network elements of ring RNG are connected to and in communication with the rest of the telecommunication network besides ring RNG; for simplicity, the Figure shows only the connections of elements NE1 and NE4 with the rest of the telecommunication network; these connections consist of two optical fibres for each NE.

Finally, an operating system OS is shown managing ring RNG. All service communications between operating systems OS and the elements NE and between neighbouring (or adjacent) network elements (or nodes) NE are performed (in this embodiment) through DCC channels with the exception of element NE7 that is provided with a Q3 interface.

Now, the method according to the present invention will be described in the following with reference to the Figure; this reference should not be considered limitative in any sense.

This method avoids misconnections in a shared protection ring RNG of a telecommunication network by way of squelching traffic protection channels where misconnections may occur; the traffic protection channels to be squelched are selected by means of squelching tables ST1, ST2, ST3, ST4, ST5, ST6, ST7, ST8 respectively located within the network elements NE1, NE2, NE3, NE4, NE5, NE6, NE7, NE8 of ring RNG; each network element NE-i of ring RNG having protection functions fills in its own squelching table ST-i with squelching data derived from "ring connection data"; in a ring there may be network elements, such as regenerators, Wavelength Division Multiplex (WDM) equipments, etc., that do not terminate e.g. a Multiplex Section and therefore do not have protection functions and do not need squelching tables.

Depending on the implementation of the present invention, "ring connection data" available at a network element of the ring may vary, i.e. the connections within ring RNG may be described at an extent and a level more or less complete, as will be more apparent from the following description of different embodiments of the present invention.

Within a ring a number of paths are usually established connecting two or more nodes of the ring; a path is established by assigning one or more traffic working channels to the path.

In general, in order to carry out squelching of traffic protection channels, it is necessary to know where each path is dropped and inserted.

According to a first embodiment, a network element, e.g. NE1, of the ring fills in its own squelching tables with squelching data directly derived only from its own connection data received from an external management entity; in this case, the received connection data need to be sufficiently complete (that is not often the case), i.e. they need to indicate at least the path source node and the path destination node of all the paths involving this network element NE1; an external management entity can be e.g. an operating system OS, as it is common and also shown in the Figure, a craft terminal (CT), etc..

According to this first embodiment, the network element do not need to receive information from other network elements of the ring in order to fill in its own squelching tables.

According to a second embodiment, a network element, e.g. NE1, of the ring receives squelching information from other network elements of the ring and fills in its own squelching tables with squelching data derived from its own connection data received from an external management entity taking said received squelching information also into account; in this case, the received connection data may be less complete, e.g. for those paths inserted by this network element NE1 they do not need to indicate the path destination node, for those paths dropped by this network element NE1 they do not need to indicate the path source node, for those node passed-though by this network element NE1 they do not need to indicate either the path destination node or the path source node; in this case, the received squelching information need to comprise at least those connection data of the other network elements of the ring necessary to this network element NE1 in order to carry out squelching e.g. for those paths inserted by this network element NE1 they need to indicate the path destination node, for those paths dropped by this network element NE1 they need to indicate the path source node, for those node passed-though by this network element NE1 they need to indicate either the path destination node or the path source node.

According to this second embodiment, some connection data are directly received from, e.g., the operating system while other connection data are propagated, as squelching information, across the ring by the network elements themselves for the purpose of squelching. As will be explained later, squelching information may well comprise other data in addition to connection data.

A network element may receive squelching information relating to different paths; if for a specific path this network element is configured as neither "pass-through" nor "insert" nor "drop" no corresponding squelching data are generated and stored into its own squelching table.

The propagation of squelching information may advantageously take place entirely or partially as follows.

A network element of the ring generates squelching information directly derived from its own connection data and sends it to one of its own ring adjacent network elements; for redundancy or for other useful reasons, the network element may send the generated squelching information to both its own ring adjacent network elements.

A network element of the ring receives squelching information from one of its own ring adjacent network elements.

The network element of the ring further forwards said received squelching information to the other of its own ring adjacent network elements. In some cases, e.g. in case of timeslot interchange, the forwarding action may well imply some processing.

A network element of the ring generates and sends an acknowledgment to one of its own ring adjacent network elements upon reception of squelching information from it.

A network element of the ring receives a squelching information acknowledgement from one of its own ring adjacent network elements.

The network element of the ring further forwards said received squelching information acknowledgement to the other of its own ring adjacent network elements. In some cases, e.g. in case of timeslot interchange, the forwarding action may well imply some processing.

According to a third embodiment of the present invention, a network element of the ring fills in its own squelching tables with squelching data derived from its own connection data received from an external management entity taking said received squelching information and said received squelching information acknowledgements also into account.

This third embodiment differs from the second embodiment only in that the connection data that are not received from the external management entity and that are necessary for squelching purposes are derived not simply from the received squelching information but also from the received squelching information acknowledgements.

The advantage of the third embodiment with respect to the second embodiment is the increased probability that a network element effectively and efficiently receives all information necessary for carrying out squelching; the disadvantage is that the traffic within the ring is slightly heavier with respect to the second embodiment due to the transmission of the acknowledgements.

Squelching information may comprise a path identifier and at least a node identifier, typically the path source node identifier and/or the path destination node identifier; the path identifier may be simply e.g. the AU number within the frame structure.

It may advantageously be provided that each network element of the ring removes squelching data from its own squelching table when a path across the ring is removed and when its own connection data are correspondingly changed.

Said connection data and/or said squelching information and/or said acknowledgments are sent through data communications channels (DCC); squelching of a traffic protection channel is realized by sending alarm indication signals (AIS) on the traffic protection channel; although other alternatives to these choices could be conceived, they are very easy to be implemented and are compatible with approved recommendations.

Due to the topology of a ring and/or to practical problems, it may happen that some of the network elements of a ring would be ready for squelching and others not yet.

In order to solve this problem, a first solution consists in that squelching data in the squelching tables are considered for squelching purposes only after that the corresponding acknowledgements have been received. In other words, squelching for a specific connection is appropriately carried out only when all the nodes of the ring involved in that specific connection are completely ready with their squelching tables.

A second solution consists in that a default squelching is performed in case of squelching data missing from the squelching tables.

The above described method according to the present invention relates to the whole shared protection ring RNG of a telecommunication network.

In order to allow the realization of such method, a method for filling in the squelching table ST-i of a network element NE-i being part of this ring RNG is carried out by each node of the ring: when (immediately after or after some time) a piece of connection data is received at network element NE-i, squelching data are automatically generated and stored into squelching table ST-i, the generated squelching data being derived from ring connection data.

The received piece of connection data generally refers to a new path established in the ring RNG.

Preferably, squelching data for a specific new path are generated and stored into the squelching tables only after that all the necessary connection information relating to this specific new path is available within network element NE-i, typically the path source node identifier and the path destination node identifier.

Anyway, it is possible that a partial generation and storage of squelching data take place within a network element as soon as the path source node identifier or the path destination node identifier is available within the network element; thereafter the generation and storage may be completed when the remaining information becomes available.

The method may be easily changed and applied in the case of timeslot interchange along the ring or in the case of channel concatenation; in these cases further connection information are necessary for appropriately carrying out squelching.

As already mentioned for the first embodiment, the generated squelching data may be directly derived from connection data of the network element.

As already mentioned for the second embodiment, the generated squelching data may take into account also squelching information received at the network element from one or both network elements adjacent to it in the ring.

As already mentioned for the third embodiment, the generated squelching data may take into account also a squelching information acknowledgement received at the network element from one or both network elements adjacent to it in the ring.

Such squelching information may comprise a path identifier and at least a node identifier, typically the path source node identifier and/or the path destination node identifier.

According to another aspect, the present invention relates also to a network element having protection functions capable of avoiding misconnections, comprising means for carrying out the above described method of filling squelching tables.

It is worth noting that at least some of said means are advantageously software means.

Therefore, according to another aspect, the present invention relates also to a processor program product comprising program code portions adapted to perform the steps of the above described filling method when executed by a processor of a network element.

According to a final aspect, the present invention relates also to memory means (e.g., a floppy disk or an EPROM memory device, ... ) storing a processor program product comprising program code portions adapted to perform the steps of the above described filling method when executed by a processor of a network element.

With the help of the Figure, a specific example of operation will be given that is not to be construed limitatively.

Let us suppose that a new path is established on AU4#2, between nodes NE1, e.g. drop node, and NE4, e.g. insert node, passing through nodes NE2 and NE3.

Connection data are sent through DCC channels to all the nodes involved in the new path allocation, namely nodes NE1, NE2, NE3, NE4, in order to configure the requested connection.

Let us also suppose that ring RNG is configured for MS-SP.

Let us finally suppose, for simplicity, that neither timeslot interchange nor concatenation are provided.

At node NE1, some squelching data are generated from its own connection data; additionally, squelching information is generated and sent to node NE2 by way of DCC channels; the squelching information is "NE1_drop_AU4#2".

At node NE2, no squelching information is generated from its own connection data as node NE2 is a "pass-though" node but the squelching information is received from node NE1 and forwarded without any processing to node NE3 by way of DCC channels; as soon as the squelching information is received from node NE1, some squelching data are generated from its own connection data and from the received squelching information.

At node NE3, no squelching information is generated from its own connection data as node NE3 is a "pass-though" node but the squelching information is received from node NE2 and forwarded without any processing to node NE4 by way of DCC channels; as soon as the squelching information is received from node NE2, some squelching data are generated from its own connection data and from the received squelching information.

At node NE4, the squelching information originating in node NE1 is received from node NE3 and, as node NE4 is the corresponding insert node for that new path, it sends back the acknowledgment of that squelching information to node NE3 by way of DCC channels; the acknowledgement could be NE4_ACK_NE1_drop_AU4#2".

This acknowledgement travels along the ring through nodes NE3 and NE2 until it is received by node NE1; at this time, node NE1 has all the necessary connection data relating to the new path and therefore can generate the remaining squelching data and store the complete squelching data into its own squelching table ST1.

At the same time as squelching information "NE1_drop_AU4#2" and the relevant acknowledgement travels along the ring starting from node NE1, another squelching information "NE4_insert_AU4#2" and the relevant acknowledgement travels along the ring starting from node NE4 via the same nodes in the opposite direction; at the end of this other travel, also node NE4 will be able to fully generate and store squelching data into its own squelching table ST4.

It is to be noted that, as soon as a pass-through node, NE2 or NE3, has received either the two different squelching information or one squelching information and one acknowledgement, this node has all the necessary connection data relating to the new path and therefore can generate and store the squelching data into its own squelching table.

In this example each node of the ring involved in the new path, receives twice the necessary information for squelching even if under a different format; this redundancy increases the reliability of the process.

## Claims

1. Method for avoiding misconnections in a shared protection ring (RNG) of a telecommunication network by way of squelching traffic protection channels where misconnections may occur, wherein the traffic protection channels to be squelched are selected by means of squelching tables (ST1 to ST8) respectively located within network elements (NE1 to NE8) of the ring (RNG), **characterized in that** each network element (NE1 to NE8) of the ring (RNG) having protection functions fills in its own squelching table (ST1 to ST8) with squelching data derived from ring connection data.

2. Method according to claim 1, wherein a network element of the ring fills in its own squelching tables with squelching data directly derived from its own connection data received from an external management entity (OS).

3. Method according to claim 2, wherein a network element of the ring further receives squelching information from other network elements of the ring and fills in its own squelching tables with squelching data taking said received squelching information also into account.

4. Method according to any of the preceding claims, wherein a network element of the ring further generates squelching information directly derived from its own connection data and send it to one or both of its own ring adjacent network elements.

5. Method according to any of the preceding claims, wherein a network element of the ring further receives squelching information from one of its own ring adjacent network elements and wherein the network element of the ring further forwards said received squelching information to the other of its own ring adjacent network elements.

6. Method according to any of the preceding claims, wherein a network element of the ring further generates and sends an acknowledgment to one of its own ring adjacent network elements upon reception of squelching information from it.

7. Method according to any of the preceding claims, wherein said connection data and/or said squelching information and/or said acknowledgments are sent through data communications channels.

8. Method according to any of the preceding claims, wherein squelching of a traffic protection channel is realized by sending alarm indication signals on the traffic protection channel.

9. Method for filling in a squelching table (ST1 to ST8) of a network element (NE1 to NE8) being part of a shared protection ring (RNG) of a telecommunication network, in order to allow the realization of the method according to any of claims from 1 to 8, wherein when a piece of connection data is received at said network element (NE1 to NE8), squelching data are automatically generated and stored into said squelching table (ST1 to ST8), said generated squelching data being derived from ring connection data.

10. Method according to claim 9, wherein the received piece of connection data refers to a new path established within the ring (RNG).

11. Method according to claim 10, wherein said generated squelching data takes into account also squelching information received at said network element from one or both network elements adjacent to said network element in the ring.

12. Method according to claim 10, wherein said squelching information comprises a path identifier and at least a node identifier, typically the path source node identifier and/or the path destination node identifier.

13. Method according to claim 11 or 12, wherein said generated squelching data takes into account also a squelching information acknowledgement received at said network element from one or both network elements adjacent to said network element in the ring.

14. Network element having protection functions capable of avoiding misconnections, comprising means for carrying out the method according to any of claims from 9 to 13.

15. Network element according to claim 14, wherein at least some of said means are a computer program, said computer program comprising computer program code means adapted to perform all the steps of claims 9-13 when said program is run on a computer.

16. A computer readable medium having a program recorded thereon, said computer readable medium comprising computer program code means adapted to perform all the steps of claims 9-13 when said program is run on a computer.
